(19) Europäisches Patentamt
European Patent Office
Office européen des brevets

(11) Numéro de publication : **0 248 688 B1**

# (12) FASCICULE DE BREVET EUROPEEN

(45) Date de publication du fascicule du brevet : **29.01.92 Bulletin 92/05**

(51) Int. Cl.[5] : **G01K 11/16,** C08F 38/00

(21) Numéro de dépôt : **87401001.0**

(22) Date de dépôt : **30.04.87**

(54) **Indicateurs de température à base de composés polydiacétyléniques.**

(30) Priorité : **30.04.86 FR 8606320**

(43) Date de publication de la demande : **09.12.87 Bulletin 87/50**

(45) Mention de la délivrance du brevet : **29.01.92 Bulletin 92/05**

(84) Etats contractants désignés : **AT BE CH DE ES FR GB GR IT LI LU NL SE**

(56) Documents cités :
**CA-A- 1 043 945**
**US-A- 3 999 946**
**US-A- 4 339 951**
**US-A- 4 624 761**

(73) Titulaire : **CENTRE NATIONAL DE LA RECHERCHE SCIENTIFIQUE (CNRS)**
**15, Quai Anatole France**
**F-75700 Paris (FR)**

(72) Inventeur : **Thierry, Annette**
**9, rue de Londres**
**F-67000 Strasbourg (FR)**
Inventeur : **Le Moigne, Jacques**
**24, rue du Plan**
**F-67000 Strasbourg (FR)**

(74) Mandataire : **Gillard, Marie-Louise et al**
**Cabinet Beau de Loménie 55, Rue d'Amsterdam**
**F-75008 Paris (FR)**

**EP 0 248 688 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des indicateurs de température à base de composés polydiacétyléniques.

Il peut être nécessaire de connaître l'histoire thermique d'une denrée périssable et particulièrement si un seuil de température a été franchi, température seuil qui peut être nuisible aux qualités de la denrée en question. Celle-ci peut être par exemple un produit alimentaire, un produit pharmaceutique, un produit biomédical ou un produit photographique. En particulier, étant donné les réglementations en vigueur au sujet des produits congelés ou surgelés, il est nécessaire de disposer d'un moyen sûr pour savoir si un produit surgelé a été décongelé et ultérieurement recongelé.

La présente invention fournit le moyen de détecter si une température seuil a été franchie pour une denrée périssable en utilisant le principe du changement de couleur irréversible d'un film mince d'un polymère diacétylénique au cours d'une élévation de température.

Les composés acétyléniques ont été longuement étudiés depuis les années 1950 et en particulier pour leurs propriétés photosensibles.

Certains diacétylènes ont la particularité de polymériser à l'état solide, généralement par effet thermique ou par exposition à un rayonnement de haute énergie (UV, rayons X ou gamma, électrons lents).

La polymérisation s'effectue en 1-4 selon le schéma suivant :

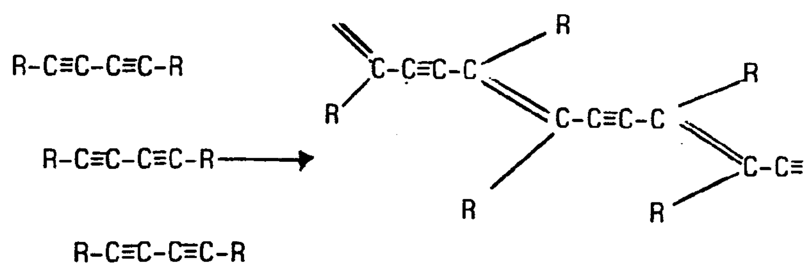

Le monomère est généralement incolore mais absorbe fortement dans le domaine de l'UV. En cours de polymérisation, une couleur intense apparaît. De façon générale, il a été admis que cette coloration est due à la forte délocalisation des électrons pi le long de la chaîne du polymère par recouvrement des orbitales pi des carbones.

Une relation a pu être établie entre la couleur du polymère et la longueur de conjugaison : de façon générale, il a été admis que la couleur bleue apparaît lorsque les chaînes de polydiacétylène sont planes et rigides, les longueurs de conjugaison sont alors supérieures à une trentaine d'unités monomères. Lorsque les chaînes sont partiellement planes ou périodiquement interrompues, c'est-à-dire lorsque la longueur de conjugaison diminue, le polymère devient rouge.

On notera que les alkyldiacétylènes symétriques en $C_6$, $C_8$ et $C_{12}$, respectivement l'hexa 2,4-diyne, l'octa 3,5-diyne et le dodéca 5,7-diyne, ont été préparés par Armitage et al. [ J. Chem. Soc., 44 (1951) et 1998 (1952)] dans le but d'étudier leurs propriétés spectroscopiques. Ultérieurement, il a été précisé par BAUGHMAN et al. [J. Pol. Sci. Pol. Phys. Ed. 11 609 (1973) ] que cette série de monomères polymérise très difficilement.

Les principaux hydrocarbures diacétyléniques dissymétriques qui ont été étudiés sont les dérivés de formule :

$$H - C \equiv C - C \equiv C - R$$

dans laquelle $R = C_nH_{2n+1}$ avec n égal à 2 ou 4.

A la connaissance de la demanderesse, un seul hydrocarbure dissymétrique à chaînes paraffiniques latérales longues est mentionné dans la littérature (brevet FR 1 525 738), à savoir l'hexacosa 11,13-diyne.

Les diacides diacétyléniques à l'état cristallin se colorent rapidement, généralement en rouge à la lumière. Lorsque les chaînes sont assez longues, 22 atomes de carbone par exemple, les mêmes diacides prennent une coloration bleue par irradiation puis virent au rouge par chauffage. L'existence du changement de couleur des dérivés diacétyléniques en général est donc connue depuis fort longtemps.

Le brevet FR 1 525 738 décrit une longue série de diacétylènes photosensibles utilisables pour l'enregistrement d'images. Ces diacétylènes sont entre autres des diacides comportant principalement 10, 20, 24 atomes de carbone, les esters correspondants, ainsi que les alkyldiacétylènes de 24 et 28 atomes de carbone. Ce brevet précise les couleurs et les sensibilités à l'irradiation des différents composés. Le changement de couleur du bleu au rouge vers 20-25°C est mentionné dans le cas du tétracosa 11,13-diyne. Il est indiqué que

la perturbation de la structure cristalline soit par chauffage, soit par contact avec un solvant du polymère irradié provoque la transformation ou conversion du photoproduit initial en un autre produit coloré, de coloration rougeâtre. Ce produit rougeâtre est thermochromïque et présente un changement irréversible de coloration.

Le brevet FR 2 341 848 concerne un indicateur d'histoire temps-température, utilisant des dérivés di- ou poly-acétyléniques. Le principe est basé sur le changement de couleur de l'échantillon en cours de polymérisation du diacétylène. La vitesse de polymérisation dépend de la température de l'échantillon. On obtient ainsi un intégrateur temps-température. Les monomères utilisés sont des diacétylènes de la série des uréthanes, des sulfonates, des molécules dissymétriques acide-alcool ou bien des dérivés cycliques, tels que ceux répondant à la formule :

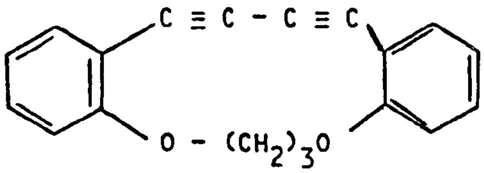

Wegner [Pure Appl. Chem., 49, 443 (1977)] a étudié plus particulièrement les réactivités des diacétylènes. La réactivité des diacétylènes substitués avec des chaînes paraffiniques dépend de la parité du nombre de carbones constituant cette chaîne. La réactivité la plus élevée est obtenue pour des chaînes latérales à nombre pair de carbones. Wegner a aussi étudié la réactivité de ces mêmes molécules en fonction de la longueur d'onde et il a obtenu le maximum de sensibilité pour les longueurs d'ondes UV voisines de 250 nm, correspondant à la fois à l'absorption de la triple liaison conjuguée et de la chaîne alkyle.

Le brevet EP 0.036.899 concerne l'utilisation de compositions de diacétylènes, polymérisables, thermochromes de façon reversible pour des mesures de température. Les diacétylènes proposés sont des dérivés de la série:

$$R\text{-}NH\text{-}O\text{-}CO\text{-}(CH_2)_n\text{-}C{\equiv}C\text{-}C{\equiv}C\text{-}(CH_2)_n\text{-}O\text{-}CO\text{-}NH\text{-}R'$$

où n = 2, 3, 4 et R et R' sont notamment des groupes alkyle en $C_1$-$C_4$.

Il existe dans ces systèmes une hystérésis du thermochromisme qui peut varier de quelques degrés à 80° C. Cette hystérésis a pu être reliée aux doses d'irradiation gamma de polymérisation ; des faibles doses produisent les hystérésis les plus importantes, alors que de fortes doses d'irradiation produisent de hauts taux de conversion en polymère et créent de faibles hystérésis de l'ordre de 20 à 30° C.

Dans un article récent, J. KIJI et al. (Chem. Lett. Jp. 35 1985) ont réétudié la série des alkyldiacétylènes symétriques comportant 16, 20, 24, 28 atomes de carbone. La polymérisation a été efectuée par irradiation UV à -78° C, elle a conduit finalement à des polymères rouges. Aucune mention d'un thermochromisme de ces polymères n'a été indiquée.

Le brevet US 4.339.951 fait état des changements de couleurs correspondant à des transitions de température dans des polydiacétylènes. Ces polydiacétylènes sont obtenus par polymérisation photochimique ou thermique de diacétylènes de type uréthane.

Les températures de transition thermochromes sont comprises entre 55° C et 230° C. La réversibilité de la transition s'effectue avec une hystérésis de 3 à 80° C.

Le brevet US 3.999.946 concerne la préparation d'un indicateur de temps-température utilisant un diacétylène polymérisable à l'état solide. Le changement de couleur est lié à la polymérisation du diacétylène et dépend à la fois de la température et de la durée de l'exposition. L'apparition de la couleur, donc de l'état de polymérisation peut être relié à l'état de dégradation d'une denrée périssable.

Le brevet CA 1.043.945 décrit la préparation de diacétylènes à substituants aliphatiques pouvant servir pour leurs propriétés semi-conductrices.

Les photopolymérisations de ces composés par irradiation UV à 254 nm conduisent à des composés de couleur jaune.

L'art antérieur cité ci-dessus montre qu'effectivement les composés polydiacétyléniques ont été largement étudiés pour leurs propriés photosensibles. On notera cependant qupe les changements de couleurs observés pour les différents polymères décrits, qui sont fonction de divers paramètres, ne sont pas toujours irréversibles.

On a maintenant trouvé une famille de monomères diacétyléniques qui, par polymérisation, fournissent des polymères présentant un changement de couleur irréversible bleu → rouge pour une température donnée.

Les monomères, qui conviennent pour l'obtention des indicateurs de température selon l'invention, sont des diacétylènes de formule générale R-C≡C-C≡C-R dans laquelle les substituants R sont des chaînes aliphatiques saturées. Ils peuvent être représentés par la formule I ci-après :

$$CH_3 - (CH_2)_n - C \equiv C - C \equiv C - (CH_2)_{n'} - CH_3 \quad (I)$$

dans laquelle n et n', identiques ou différents, représentent un nombre entier compris entre 2 et 21. Les composés dissymétriques (n et n' différents) sont particulièrement préférés aux fins de l'invention.

Pour des raisons de commodité, les diacétylènes ci-dessus seront dénommés dans la suite de la présente description par le nombre total de carbones de l'unité monomère, soit par exemple $C_{16}$, $C_{20}$, $C_{22}$, $C_{24}$, $C_{28}$ et $C_{32}$. De plus, pour les monomères diacétyléniques dissymétriques, on ajoutera en indice le nombre d'atomes de carbone des monoacétyléniques de départ, par exemple :

$C_{18(8-10)}$ désignera l'octadéca 7,9-diyne et

$C_{22(8-14)}$ le docosa 7,9-diyne.

Tous ces monomères diacétyléniques sont incolores.

Les monomères ci-dessus ou leurs mélanges sont polymérisables uniquement à l'état cristallisé sous forme de film cristallin ou de monocristal. L'état cristallisé est obtenu soit par refroidissement depuis l'état liquide, soit par cristallisation à partir d'une solution.

La polymérisation peut être réalisée de différentes manières bien connues de l'homme de l'art. En particulier, il peut s'agir d'une photopolymérisation par exposition à un rayonnement de haute énergie, tel que par exemple un rayonnement UV, X ou gamma ou un rayonnement aux électrons lents. La polymérisation est fonction de la température, de la structure cirstalline et varie selon le support sur lequel est déposé le monomère.

Les polymères obtenus ou les mélanges polymère/monomères sont de couleur bleue. Ils présentent des bandes d'absorption plus ou moins larges pour les grandes longueurs d'onde du spectre visible (580-650 nm). On notera que ces bandes ont tendance à se déplacer légèrement vers les longueurs d'ondes plus courtes pour des temps de polymérisation de plus en plus élevés.

La couleur bleue apparaît déjà pour de faibles taux de polymérisation (de l'ordre du pourcent). Dans la suite de la présente description, on désignera par "composé polydiacétylénique" tous les produits colorés en bleu, qu'il s'agisse de polymères purs ou de mélanges polymère/monomères même lorsque le taux de polymères est faible.

Au cours d'une élévation de température du composé polydiacétylénique obtenu, la fusion des groupes latéraux de la chaîne polydiacétylénique donne une certaine mobilité à cette chaîne. Ceci se traduit par une perte de planéité de la chaîne, c'est-à-dire par une réduction de la longueur de conjugaison, qui se manifeste par une profonde modification du spectre d'absorption, la bande d'absorption à 600-650 nm tendant à disparaître.

On a montré que cette transition thermodynamique, qui induit un changement de couleur du composé polydiacétylénique correspond à la fusion des chaînes alkyle du polymère. De plus, ce changement de couleur ou transition, qui équivaut en fait à une diminution de l'ordre du système polymère, est irréversible.

On a donc sélectionné une nouvelle famille de composés polydiacétyléniques présentant un comportement thermochromique particulier, à savoir un changement de couleur bleu en rouge irréversible qui se produit pour une température donnée, spécifique de la longueur de la chaîne alkyle du monomère de départ. Ces composés polydiacétyléniques peuvent être utilisés comme indicateurs de température.

La présente invention a donc pour objet des indicateurs de température qui sont constitués d'au moins un composé polydiacétylénique obtenu par polymérisation d'un monomère diacétylénique de formule (I) telle que définie ci-dessus ou d'un mélange de ceux-ci, le ou lesdits monomères étant à l'état cristallisé.

Les indicateurs de température de l'invention sont avantageusement déposés sur un support solide chimiquement inerte sous la forme d'un film mince. Le support, qui doit être aussi bien inerte vis-à-vis de la denrée périssable que vis-à-vis du composé polydiacétylénique, peut être par exemple du papier, du verre, du tissu, du quartz, du métal, tel que l'aluminium, des polymères, tels que le polyéthylène.

Les indicateurs de température de l'invention peuvent aussi être avantageusement incorporés comme additifs ou en mélange dans un thermoplastique chimiquement inerte vis-à-vis du composé polydiacétylénique.

Le thermoplastique peut être un polymère compatible avec les oléfines, telles que les polyoléfines, polyéthylène par exemple. Le mélange est réalisé dans le polymère à l'état fondu, puis le film mince obtenu par refroidissement est soumis à une photopolymérisation pour former le composé polydiacétylénique.

L'indicateur de température peut être constitué soit d'un seul composé polydiacétylénique, soit d'un mélange judicieux de tels composés selon la température que l'on souhaite détecter.

Les monomères diacétyléniques symétriques de formule (I) ci-dessus peuvent être obtenus par couplage oxydatif de l'alcyne par des sels cuivreux selon le procédé décrit par EGLINGTON et al. dans J. Chem. Soc., 889 (1959). Ce procédé consiste à chauffer un alcyne en présence d'un sel cuivreux, par exemple l'acétate de cuivre dans un mélange pyridine-méthanol-éther à une température comprise entre 30 et 35°C environ sous un léger courant d'oxygène pur et pendant 48 à 72 h environ. Ensuite, l'éther et le méthanol sont éliminés, par exemple par évaporation sous pression réduite après élimination de l'excès d'oxygène. La solution est reprise par de la pyridine fraîche anhydre pendant 48 à 72 h entre 40 et 50°C sous reflux. La pyridine est ensuite éliminée et le mélange résiduel est acidifié. Après extraction à l'éther, on obtient un produit huileux cristallisant

à froid. Ce produit huileux est ensuite purifié par chromatographie selon des moyens connus.

A titre d'exemples d'alcynes de départ, on peut utiliser les produits disponibles dans le commerce sans purification ultérieure tels que par exemple les produits connus sous les dénominations commerciales EGA 24,442-2 (1-hexyne) EGA 24,446-5 (1-octyne), EGA 24,438-4 (1-décyne), EGA 24,440-6 (1-dodécyne) mis sur le marché par EGA-ALDRICH. On peut également faire la synthèse de ces produits. Par exemple, l'alcyne en $C_{16}$ peut être synthétisé par l'intermédiaire de l'acétylure de sodium dans l'ammoniac liquide, soumis ultérieurement à une substitution par le bromure de tétradécane dans le diméthylformamide selon le procédé décrit par W. Ziegenbein et al. Chemistry of Acetylene H.G. Viehe p. 187 Edition Marcel Dekker NY(1969).

On peut également utiliser le procédé de déhydrobromuration du dibromure en 1,2 correspondant, procédé bien connu de l'homme de l'art.

Les monomères diacétyléniques dissymétriques de formule (I) ci-dessus peuvent également être obtenus par couplage oxydatif selon le procédé décrit ci-dessus en utilisant un mélange de deux hydrocarbures monoacétyléniques de longueurs de chaînes différentes dans des proportions appropriées.

La polymérisation des monomères diacétyléniques de formule (I) est avantageusement réalisée par irradiation, à l'aide d'un rayonnement à haute énergie, par exemple un rayonnement UV (lampe UV à 254 nm), d'un film mince cristallin d'un monomère ou d'un mélange de monomères.

Les caractéristiques d'absorption du composé polydiacétylénique formé varient en fonction de la durée de polymérisation. Pour des durées relativement faibles (30 s environ) le composé polydiacétylénique obtenu présente un pic principal d'absorption vers 650 nm. Lorsqu'on augmente la durée d'irradiation, le spectre évolue vers les courtes longueurs d'ondes, la teinte dominante du produit restant le bleu.

Bien que tous les composés polydiacétyléniques obtenus après différentes durées d'irradiation conviennent aux fins de l'invention, il est préférable d'utiliser des composés polydiacétyléniques ayant un taux de polymérisation relativement faible, c'est-à-dire les composés qui présentent un pic d'absorption vers 580-650 nm.

Le composé polydiacétylénique obtenu par irradiation d'un monomère diacétylénique unique présente sans modification du taux de polymérisation un changement brutal de couleur dans une gamme étroite de température. La température de transition dépend comme indiqué précédemment du nombre de carbones de la chaîne paraffinique. Pour les alkyldiacétylènes symétriques, les transitions sont espacées d'une vingtaine de degrés pour la série $C_{16}$, $C_{20}$, $C_{24}$, $C_{28}$, $C_{32}$. Les polymères obtenus par irradiation d'un mélange de monomères de différentes longueurs de chaîne alkyle conservent les propriétés de changement de couleur de l'homopolymère, mais les domaines de transition sont généralement compris entre les températures de chacun des monomères, ce qui permet de remplacer la gamme discrète des températures de transition par une gamme quasi continue. On notera que les mélanges présentent généralement des eutectiques.

Par ailleurs, il faut noter que le monomère présent dans le composé polydiacétylénique peut encore être polymérisé par une nouvelle irradiation à l'état cristallisé. Le spectre d'absorption obtenu se superposera alors au spectre rouge irréversible.

L'indicateur de couleur selon l'invention devra donc, dans ce cas, être protégé des rayonnements initiateurs de polymérisation par tous moyens appropriés.

L'invention va être maintenant décrite plus en détail par les exemples illustratifs ci-après non limitatifs.

Dans ces exemples, la pureté des monomères a été contrôlée par chromatographie en phase gazeuse, spectrométries de masse et RMN. La principale impureté résiduelle qui a été relevée est l'alcyne de départ, sa concentration étant dans chaque cas de l'ordre de 2 % ou inférieure.

A-Préparation des monomères et des mélanges de monomères

EXEMPLE 1

Préparation du tétracosa 11,13-diyne ou monomère en $C_{24}$

(formule I : n = n' = 9).

Le 1-dodécyne (EGA 24, 440-6)(1,2 g) a été chauffé en présence d'acétate de cuivre (4 g) dans un mélange de pyridine (100 $cm^3$) de méthanol (300 $cm^3$) et d'éther (400 $cm^3$) pendant 72 h à 30-32°C en présence d'un léger courant d'oxygène pur. L'éther et le méthanol ont ensuite été évaporés sous pression réduite après avoir éliminé l'excès d'oxygène dissous par un passage d'argon en présence de 1 g de CuCl. La solution a été reprise par de la pyridine fraîche anhydre (400 $cm^3$) pendant 72 h à 47°C (reflux). Une partie de la pyridine a ensuite été évaporée sous pression réduite, puis le mélange a été acidifié avec une solution aqueuse HCl à 10 %. Par extraction à l'éther et après évaporation, on a obtenu un liquide huileux cristallisant à froid. L'huile a été chromatographiée dans $CHCl_3$ sur $SiO_2$. On a obtenu une huile transparente à la température ambiante (0,877 g r = 73 %). Le produit a été contrôlé par RMN, chromatographie en phase gazeuse (pureté 97 %) et spectroscopie

de masse (pic 330).

EXEMPLE 2

Préparation des monomères symétriques en $C_{12}$; $C_{16}$, $C_{18}$, $C_{20}$, $C_{22}$, $C_{28}$, et $C_{32}$

En répétant le mode opératoire de l'exemple 1, on a obtenu à partir des alcynes ci-après : 1-hexyne, 1-octyne, 1-nonyne, 1-décyne, 1-undécyne, 1-tétradécyne et 1-hexadécyne respectivement les diacétylènes en $C_{12}$, $C_{16}$, $C_{20}$, $C_{22}$, $C_{28}$ et $C_{32}$ dont les températures de fusion (ou températures de transition) mesurées par microcalorimétrie différentielle à balayage (DSC) sont indiquées dans le tableau I ci-après.

TABLEAU I

Températures de transition des différents alkyldiacétylènes mesurées par DSC.

| diacétylène | n = n' | $T_f$ °C | nomenclature |
|---|---|---|---|
| $C_{12}$(6-6) | 3 | - 62 [(b)] | dodéca 5,7-diyne |
| $C_{16}$(8-8) | 5 | - 29,4 [(a)] | hexadéca 7,9-diyne |
| $C_{18}$(9-9) | 6 | + 8,2 [(b)] | octadéca 8,10-diyne |
| $C_{20}$(10-10) | 7 | - 1,6 [(a)] | eicosa 9,11-diyne |
| $C_{22}$(11-11) | 8 | + 31,1 [(a)] | docosa 10,12-diyne |
| $C_{24}$(12-12) | 9 | + 20,5 [(a)] | tétracosa 11,13-diyne |
| $C_{28}$(14-14) | 11 | + 36,9 [(a)] | octacosa 13,15-diyne |
| $C_{32}$(16-16) | 13 | + 50,1 [(a)] | dotriaconta 15,17-diyne |

DSC : (a) vitesse 1,25°C $min^{-1}$
(b) vitesse 5,0 °C $min^{-1}$

EXEMPLE 3

Préparation des mélanges de monomères $C_{16}$-$C_{20}$ ; $C_{20}$-$C_{24}$ et $C_{16}$-$C_{28}$

Les monomères obtenus selon les exemples 1 ou 2 ont été mélangés à l'état liquide. Les températures de transition de ces mélanges ont été mesurées par calorimétrie différentielle à balayage (DSC). Les diagrammes des températures de transition de ces mélanges sont représentés sur les figures 1a, 1b et 1c annexées, sur lesquelles on a porté en ordonnées la température en degrés Celsius et en abscisses la composition du mélange en monomères. La vitesse de balayage du microcalorimètre était de 5°C/min.

Les figures 1a, 1b et 1c sont représentatives respectivement des mélanges :

$C_{16}$ - $C_{20}$ Fig. 1a
$C_{20}$ - $C_{24}$ Fig. 1b
$C_{16}$ - $C_{28}$ Fig. 1c

Des eutectiques ont été observés pour les mélanges $C_{16}$-$C_{20}$ et $C_{20}$-$C_{24}$, respectivement pour 18 % de $C_{20}$ et 21 % de $C_{24}$. Les températures de transition de ces eutectiques sont respectivement de l'ordre de -30°C et de -2°C.

EXEMPLE 4

4.1 Préparation de l'octadéca 7,9-diyne

On a procédé au couplage oxydatif entre le 1-octyne et le 1-décyne selon le mode opératoire décrit précédemment (exemple 1). La réaction a conduit à un mélange de trois monomères. Un choix judicieux des proportions des alcynes de départ a permis d'obtenir un mélange formé essentiellement de deux constituants.

A partir d'un mélange de 1,65 g de 1-octyne et de 4,14 g de 1-décyne, on a obtenu 4,89 g d'un composé constitué de 4 % d'hexadéca 7,9-diyne, de 33 % d'octadéca 7,9-diyne et de 63 % d'éicosa 9,11-diyne.

Les températures de transition de ce mélange sont données dans le tableau II ci-après (mélange n° 1)

Les constituants du mélange ont été séparés par chromatographie préparative, cette séparation conduisant à trois fractions (phase stationnaire $SiO_2$-$C_8$ éluant acétonitrile). L'analyse par chromatographie en phase gazeuse de la fraction utile a donné la composition suivante: $C_{18(8-10)}$ 95 %, $C_{20(10-10)}$ 2 %, $C_{16(8-8)}$ 1,5 %. Analyse par spectrométrie de masse, M = 246 (ionisaiton chimique $NH_3$, pics observés : M + 1, M + 18) correspond à l'octadéca 7-9 diyne ($C_{18(8-10)}$).

La température de transition est mesurée par microcalorimétrie différentielle à balayage (DSC). La transition s'effectue par un pic unique situé à -26,5° C.

4.2. Préparation des diacétylènes nonadéca 4,6 diyne, docosa 9,11-diyne, docosa 7-9-diyne et tétracosa 9-11-diyne.

En répétant le mode opératoire décrit à l'exemple 4.1 avec les couples d'alcynes, (1-pentyne, 1-tetradécyne), (1-décyne, 1-dodécyne), (1-octyne, 1-tétradécyne), (1-décyne, 1-tetradécyne), on obtient les mélanges n° 2, 3, 4, 5 constitués de deux ou trois diacétylènes différents. Les caractéristiques de ces mélanges sont rassemblées dans le tableau II.

A partir de ces mélanges la fraction de diacétylène dissymétrique a été séparée par une méthode identique à celle utilisée pour le $C_{18(8-10)}$. La pureté des monomères, controlée par chromatographie en phase gazeuse, est la suivante: $C_{19(5-14)}$ 87 %, $C_{22(10-12)}$ 96 %, $C_{22(8-14)}$ 92 %, $C_{24(10-14)}$ 96 %. La température de transition de ces diacétylènes dissymétriques est indiquée dans le tableau III ci-après.

Les mélanges décrits plus haut peuvent être utilisés tels quels, sans séparation pour la polymérisation.

TABLEAU II

Préparation des diacétylènes dissymétriques: analyse des mélanges par chromatographie en phase gazeuse et caractérisation des températures de transition par DSC:

| N° | Diacétylène dissymétrique | % espèce diacétylène (CG-FID) * | Températures de transition du mélange °C (DSC) |
|---|---|---|---|
| 1 | $C_{18(8-10)}$ | 10%$C_{16(8-8)}$ | -40 |
| | | 43%$C_{18(8-10)}$ | -33 |
| | | 47%$C_{20(10-10)}$ | -10 |

| N° | Diacétylène dissymétrique | % espèce diacétylène (CG-FID) * | Températures de transition du mélange °C (DSC) |
|---|---|---|---|
| 2 | $C_{19(5-14)}$ | 46%$C_{19(5-14)}$<br>15%$C_{28(14-14)}$ | -28,1<br>+27,6 |
| 3 | $C_{22(10-12)}$ | 21%$C_{20(10-10)}$<br>49%$C_{22(10-12)}$<br>29%$C_{24(12-12)}$ | -19,5, - 7,2<br>-3,3<br>+2,8 |
| 4 | $C_{22(8-14)}$ | 68%$C_{16(8-8)}$<br>30%$C_{22(8-14)}$ | -39,6<br>-21,4 |
| 5 | $C_{24(10-14)}$ | 36%$C_{20(10-10)}$<br>53%$C_{24(10-14)}$<br>8%$C_{28(14-14)}$ | -10<br>+3,5<br>+8,9 |

* CG-FID = chromatographie en phase gazeuse - détecteur à ionisation de flamme.

TABLEAU lII

Températures de transition des diacétylènes dissymétriques préparés selon l'exemple 4.

| Diacétylène | n | n' | $T_f$ °C | nomenclature |
|---|---|---|---|---|
| $C_{18(8-10)}$ | 5 | 7 | - 26,5 | octadéca 7,9-diyne |
| $C_{19(5-14)}$ | 2 | 11 | - 8,1 | nonadéca 4,6-diyne |
| $C_{22(10-12)}$ | 7 | 9 | + 3,1 | docosa 9 , 11-diyne |
| $C_{22(8-14)}$ | 5 | 11 | + 2,0 | docosa 7 , 9-diyne |
| $C_{24(10-14)}$ | 7 | 11 | + 18,2 | tetracosa 9,11-diyne |

B-Préparation des composés polydiacétyléniques

EXEMPLE 5

On a soumis les monomères ou les mélanges de monomères obtenus selon les exemples 1 à 4 ci-dessus à une photopolymérisation à l'aide d'une lampe UV de 254 nm de longueur d'onde et de faible puissance (flux à 15 cm, 260 $\mu W/cm^2$), les monomères étant, à l'état cristallisé, sous la forme d'un film mince.

Les aptitudes à la polyméristion ont été mesurées sur les échantillons des diacétylènes purs. Les diacétylènes purs les plus photoréactifs sont l'eicosa 9-11 diyne, $C_{20(10-10)}$, le tétracosa 11-13 diyne, $C_{24(12-12)}$, le docosa 9 - 11 diyne, $C_{22(10-12)}$, le tétracosa 9 - 11 diyne, $C_{24(10-14)}$.
Dans le tableau II, les mélanges de diacétylènes (symétriques + dissymétriques) les plus photoréactifs sont les mélanges n° 1, 3, 5.

Les spectres d'absorption des composés polydiacétyléniques ont été enregistrés en fonction du temps d'irradiation de l'échantillon monomère, préalablement cristallisé sous forme de film mince.

Ces spectres sont représentés sur les figures 2a, 2b et 2c annexées, lesquelles sont représentatives respectivement des composés polydiacétyléniques obtenus à partir des monomères :

en $C_{20(10-10)}$ (Fig. 2a) ;

en $C_{24(12-12)}$ (Fig. 2b) et du mélange $C_{16(8-8)}$-$C_{20(10-10)}$ comportant 80 % de $C_{20(10-10)}$ (Fig. 2c).

La légende des figures 2a, 2b et 2c est indiquée dans le tableau IV ci-après ; les temps indiqués dans ce tableau sont les temps de photopolymérisation réalisés aux températures données dans la colonne "composé".

## TABLEAU IV

| FIGURE | Composé | Courbe 0 | Courbe 1 | Courbe 2 | Courbe 3 | Courbe 4 |
|---|---|---|---|---|---|---|
| Fig. 2a | éicosa 9,11-diyne à -20°C | monomère | 30 s | 35 min | - | - |
| Fig. 2b | tétracosa 11,13-diyne à 5°C | - | monomère | 2 min 30 s | 10 min | 50 min |
| Fig. 2c | mélange 20 % de $C_{16}$, 80 % de $C_{20}$ à -38°C | monomères liquides | monomères cristallisés | 5 min | 10 min | - |

Les résultats obtenus montrent que les composés polydiacétyléniques sont transparents dans le proche IR à partir de 750 nm. On note que ces composés ont une teinte bleue d'autant plus nette que le durée de photopolymérisation est faible.

Par calorimétrie différentielle à balayage, on a mesuré les températures de transition du monomère et du polymère bleu pour le $C_{24(12-12)}$. Les résultats obtenus sont reportés sur les figures 3a (diacétylénique en $C_{24(12-12)}$ ou DA $C_{24}$) et 3b (composé polydiacétylénique en $C_{24(12-12)}$ ou PDA $C_{24}$) et montrent qu'il existe une similitude entre les deux diagrammes de fusion.

EXEMPLE 6

Thermochromisme des composés polydiacétyléniques en $C_{20(10-10)}$ et $C_{16(8-8)}$ -$C_{20(10-10)}$ (mélange)

Différents spectres de transmission ont été enregistrés successivement à des températures croissantes. On a constaté que les polymères passent progressivement du bleu au rouge. Dans tous les cas, les polymères ont des comportements semblables, ce changement de couleur étant toujours irréversible.

A titre d'exemple, on a représenté sur les figures 4a, 4b et 4c l'évolution des spectres d'absorption des composés polydiacétyléniques préparés à l'exemple 5 à partir du monomère diacétylénique en $C_{20}$ (Fig. 4a) ou du mélange $C_{16(8-8)}$-$C_{20(10-10)}$ (Fig. 4b et 4c) en fonction de températures croissantes (-9°C à + 3,5°C pour $C_{20}$ et -40°C à -2°C pour mélange $C_{16(8-8)}$ - $C_{20(10-10)}$ - courbes pleines).

Le retour à basse température après fusion doue un spectre d'absorption des composés de type rouge (courbes discontinues T = -24°C pour $C_{20}$ et T = -23°C pour $C_{16(8-8)}$ - $C_{20(10-10)}$). On note ainsi l'irréversibilité.

De plus, le changement de couleur observé est persistant. En effet, des tests ont montré que, pour des polymères rouges en $C_{24(12-12)}$ ou $C_{20(10-10)}$ sur différents types de supports (papier, verre, quartz) maintenus à des températures voisines de -20°C pendant des durées allant jusqu'à 3 mois, aucun changement notable de couleur n'est intervenu.

Exemple 7 : Thermochromisme des mélanges comportant un diacétylène dissymétrique:

Le thermochromisme est observé sur les mélanges n° 1, 3, 5 du tableau II. L'observation est effectuée à l'aide d'un système d'analyse thermo-microscopique, le monomère ou le mélange est déposé dans une capsule en saphir permettant la polymérisation par UV et l'observation microscopique.

Le mélange n° 1 est polymérisé à - 45°C (UV 254nm, 5 cm) pendant une durée de 10 min. Sa couleur est bleu-mauve. On note le début de la transformation à -15°C où il devient rouge sombre. Cette transition s'étend jusqu'à - 9°C où il devient rouge-orangé.

Le mélange n° 3 est polymérisé à - 25°C (UV 254nm, 5 cm)pendant une durée de 5 min. Sa couleur est bleu-sombre à noir selon l'épaisseur. Le début de la transition a lieu à -7°C où le polymère est rouge sombre. Il devient rouge-orangé à -4°C et la transformation se termine à + 2°C.

Le mélange n° 5 est polymérisé à -20°C (UV 254nm, 5 cm)pendant une durée de 1 min. Sa couleur est bleu-marine avec un aspect brillant. Le début de la transition s'effectue vers -8°C où la couleur devient mauve. A -3°C il devient rouge et la transition se termine à + 5°C avec une couleur rouge-orangé.

## TABLEAU V

Aptitude à la photopolymérisation des diacétylènes purs. Irradiation UV 254nm, distance 5 cm (+++) bleu sombre pour une durée d'irradiation $<$ 1 min. (++) bleu sombre $t_{ir} < 5$ min. (+) bleu pour $t_{ir} > 5$ min. (-) pas de polymérisation après $t_{ir} > 30$ min.

| diacétylène | T °C échantillon | photopolymérisation |
|---|---|---|
| $C_{16(8-8)}$ | - 45 | (+)[(c)], (-) |
| $C_{18(9-9)}$ | - 25 | (-) |

| diacétylène | T °C échantillon | photopolymérisation |
|---|---|---|
| $C_{19(5-14)}$ | - 30 | (+) |
| $C_{20(10-10)}$ | - 20 | (+++) |
| $C_{22(10-12)}$ | - 15 | (+++ (a) |
| $C_{22(11-11)}$ | ambiante | (-) |
| $C_{22(8-14)}$ | - 22 | (++) (a) |
| $C_{24(12-12)}$ | + 5 | (+++) |
| $C_{24(10-14)}$ | + 9 | (+++) (a) |
| $C_{28(14-14)}$ | ambiante | (+++) (b), (-) |
| $C_{32(16-16)}$ | ambiante | (+++) (b), (-) |

(a) couleur mauve, (b) polymérise rapidement sur certains supports : papier, plaques $SiO_2$ de chromatographie. (c) Polymérisation non reproductible, $t_{ir}$ = temps d'irradiation.

EXEMPLE 8 : Préparation d'un polydiacétylène au sein d'un polymère.

2,5 mg de diacétylène monomère $C_{24(12-12)}$ est incorporé à 2,7 mg de polyéthylène fondu à 145°C (masse moléculaire 21000). Un film mince est obtenu par refroidissement, puis il est amené à + 5°C pour obtenir la cristallisation du diacétylène incorporé.

Le film est ensuite soumis à une irradiation UV de 254 nm pendant 3 min. Le film devient bleu intense. Le réchauffement du film est observé par un système thermomicroscopique de 5 à 25° C à la vitesse de 2° C par minute. Le changement de couleur bleu au mauve commence à 12° C et la couleur rouge irréversible apparaît à partir de 16°C, le maximum du pic enthalpique de fusion du $C_{24(12-12)}$ étant situé à 20,5°C.

## Revendications

### Revendications pour les Etats contractants suivants: BE, CH, DE, FR, GB, GR, IT, LU, LI, NL, SE

1. Indicateur de température, caractérisé en ce qu'il est constitué d'au moins un composé polydiacétylénique présentant un thermochromisme irréversible obtenu par polymérisation d'un monomère de formule I :

$$CH_3\text{-}(CH_2)_n\text{-}C{\equiv}C\text{-}C{\equiv}C\text{-}(CH_2)_{n'}\text{-}CH_3 \quad I$$

dans laquelle n et n′ sont des nombres entiers identiques ou différents, compris entre 2 et 21, ou d'un mélange de tels monomères, le ou lesdits monomères étant à l'état cristallisé.

2. Indicateur de température selon la revendication 1, caractérisé en ce que le monomère est à l'état cristallisé sous la forme d'un film polycristallin ou d'un monocristal.

3. Indicateur de température selon l'une des revendications 1 ou 2, caractérisé en ce que le composé polydiacétylénique est obtenu par photopolymérisation par irradiation à l'aide d'un rayonnement à haute énergie d'au moins un monomère diacétylénique de formule I telle que définie dans la revendication 1.

4. Indicateur de température selon l'une quelconque des revendications 1 à 3, caractérisé en ce que le composé polydiacétylénique est un mélange du polymère polydiacétylénique et du monomère ou du mélange de monomères diacétyléniques correspondants.

5. Indicateur de température selon l'une quelconque des revendications 1 à 4, caractérisé en ce que le composé polydiacétylénique est déposé sur un support chimiquement inerte, sous la forme d'un film mince.

6. Indicateur de température selon l'une quelconque des revendications 1 à 5, caractérisé en ce que le composé polydiacétylénique est obtenu par photopolymérisation par irradiation à l'aide d'un rayonnement à haute énergie d'au moins un monomère diacétylénique de formule I tel que défini dans la revendication 1 après

incorporation dans un thermoplastique à l'état fondu.

7. Indicateur de température selon l'une quelconque des revendications 1 à 5, caractérisé en ce que le composé polydiacétylénique est obtenu par photopolymérisation aux rayonnements UV d'au moins un monomère de formule I pendant un temps suffisant pour obtenir un pic d'absorption entre 580 et 650 nm.

**Revendications pour les Etats contractants suivants: AT et ES**

1. Procédé de préparation d'un indicateur de température constitué d'au moins un composé polydiacétylénique présentant un thermochromisme irréversible caractérisé en ce que le composé polydiacétylénique est obtenu par photopolymérisation par irradiation à l'aide d'un rayonnement à haute énergie d'au moins un monomère diacétylénique de formule I :

$$CH_3\text{-}(CH_2)_n\text{-}C{\equiv}C\text{-}C{\equiv}C\text{-}(CH_2)_{n'}\text{-}CH_3 \quad I$$

dans laquelle n et n′ sont des nombres entiers identiques ou différents, compris entre 2 et 21, ou d'un mélange de tels monomères, le ou lesdits monomères étant à l'état cristallisé.

2. Procédé selon la revendication 1, caractérisé en ce que le monomère de formule I est à l'état cristallisé sous la forme d'un film polycristallin ou d'un monocristal.

3. Procédé de préparation d'un indicateur de température selon l'une des revendications 1 ou 2, caractérisé en ce que le composé polydiacétylénique est un mélange du polymère polydiacétylénique et du monomère ou du mélange de monomères diacétyléniques correspondants.

4. Procédé de préparation d'un indicateur de température selon l'une quelconque des revendications 1 à 3, caractérisé en ce que le composé polydiacétylénique est déposé sur un support chimiquement inerte, sous la forme d'un film mince.

5. Procédé de préparation d'un indicateur de température selon l'une quelconque des revendications 1 à 4, caractérisé en ce que le composé polydiacétylénique est obtenu par photopolymérisation par irradiation à l'aide d'un rayonnement à haute énergie d'au moins un monomère diacétylénique de formule I après incorporation dans un thermoplastique à l'état fondu.

6. Procédé de préparation d'un indicateur de température selon l'une quelconque des revendications 1 à 4, caractérisé en ce que le composé polydiacétylénique est obtenu par photopolymérisation aux rayonnements UV d'au moins un monomère de formule I pendant un temps suffisant pour obtenir un pic d'absorption entre 580 et 650 nm.

**Patentansprüche**

**Patentansprüche Für folgenden Vertragsstaaten: BE, CH, DE, FR, GB, GR, IT, LI, LU, NL, SE:**

1. Temperaturanzeiger, dadurch gekennzeichnet, daß er aus mindestens einer Polydiacetylenverbindung gebildet ist, die eine irreversible Thermochromie aufweist und durch Polymerisation eines Monomeren der Formel I:

$$CH3\text{-}(CH_2)_n\text{-}C{\equiv}C\text{-}C{\equiv}C\text{-}(CH_2)_{n'}\text{-}CH_3 \quad I$$

in welcher n und n′ gleiche oder verschiedene ganze Zahlen zwischen 2 und 21 sind, oder einer Mischung aus solchen Monomeren erhalten ist, wobei das oder die Monomeren in kristallisiertem Zustand vorliegen.

2. Temperaturanzeiger nach Anspruch 1, dadurch gekennzeichnet, daß das Monomere in kristallisiertem Zustand in Form eines polykristallinen Films oder eines Monokristalls vorliegt.

3. Temperaturanzeiger nach einem der Ansprüche 1 oder 2, dadurch gekennzeichnet, daß die Polydiacetylenverbindung durch Fotopolymerisation mindestens eines Diacetylen-monomeren der Formel I wie in Anspruch 1 definiert mittels Bestrahlung mit Hilfe von Hochenergiestrahlung erhalten ist.

4. Temperaturanzeiger nach einem der Ansprüche 1 bis 3, dadurch gekennzeichnet, daß die Polydiacetylenverbindung eine Mischung des Polydiacetylenpolymeren und des Monomeren oder der Mischung der entsprechenden Diacetylenmonomeren ist.

5. Temperaturanzeiger nach einem der Ansprüche 1 bis 4, dadurch gekennzeichnet, daß die Polydiacetylenverbindung auf einem chemisch inerten Träger in Form eines dünnen Films aufgebracht ist.

6. Temperaturanzeiger nach einem der Ansprüche 1 bis 5, dadurch gekennzeichnet, daß die Polydiacetylenverbindung durch Fotopolymerisation mindestens eines Diacetylen-monomeren der Formel I wie in Anspruch 1 definiert mittels Bestrahlung mit Hilfe von Hochenergiestrahlung nach Einarbeitung in einen Thermoplasten in geschmolzenem Zustand erhalten ist.

7. Temperaturanzeiger nach einem der Ansprüche 1 bis 5, dadurch gekennzeichnet, daß die Polydiacetylenverbindung durch Fotopolymerisation mindestens eines Monomeren der Formel I mittels UV-Strahlen wäh-

rend eines für die Erzielung eines Absorptionspeaks zwischen 580 und 650 nm ausreichenden Zeitraums erhalten ist.

## Patentansprüche

### Patentansprüche Für folgenden Vertragsstaaten: AT und ES:

1. Verfahren zur Herstellung eines Temperaturanzeigers, der aus mindestens einer Polydiacetylenverbindung gebildet ist, die eine irreversible Thermochromie aufweist, dadurch gekennzeichnet, daß die Polydiacetylenverbindung durch Fotopolymerisation mindestens eines Diacetylenmonomeren der Formel I :

$$CH_3\text{-}(CH_2)_n\text{-}C{\equiv}C\text{-}C{\equiv}C\text{-}(CH_2)_{n'}\text{-}CH_3 \quad I$$

in welcher n und n′ gleiche oder verschiedene ganze Zahlen zwischen 2 und 21 sind, oder einer Mischung aus solchen Monomeren mit Hilfe von Hochenergiestrahlung erhalten wird, wobei das oder die Monomeren in kristallisiertem Zustand vorliegen.

2. Verfahren nach Anspruch 1, dadurch gekennzeichnet, daß das Monomere der Formel I in kristallisiertem Zustand in Form eines polykristallinen Films oder eines Monokristalls vorliegt.

3. Verfahren zur Herstellung eines Temperaturanzeiges nach einem der Ansprüche 1 oder 2, dadurch gekennzeichnet, daß die Polydiacetylenverbindung eine Mischung des Polydiacetylenpolymeren und des Monomeren oder der Mischung der entsprechenden Diacetylenmonomeren ist.

4. Verfahren zur Herstellung eines Temperaturanzeigers nach einem der Ansprüche 1 bis 3, dadurch gekennzeichnet, daß die Polydiacetylenverbindung auf einem chemisch inerten Träger in Form eines dünnen Films aufgebracht wird.

5. Verfahren zur Herstellung eines Temperaturanzeigers nach einem der Ansprüche 1 bis 4, dadurch gekennzeichnet, daß die Polydiacetylenverbindung durch Fotopolymerisation mindestens eines Diacetylenmonomeren der Formel (I) mittels Bestrahlung mit Hilfe von Hochenergiestrahlung nach Einarbeitung in einen Thermoplasten in geschmolzenem Zustand erhalten wird.

6. Verfahren zur Herstellung eines Temperaturanzeigers nach einem der Ansprüche 1 bis 4, dadurch gekennzeichnet, daß die Polydiacetylenverbindung durch Fotopolymerisation mindestens eines Monomeren der Formel I mittels UV-Strahlen während eines für die Erzielung eines Absorptionspeaks zwischen 580 und 650 nm ausreichenden Zeitraums erhalten wird.

## Claims

### Claims for the following Contracting States : BE, CH, DE, FR, GB, GR, IT, LI, LU, NL, SE

1. Temperature indicator, characterized in that it consists of at least one polydiacetylene compound exhibiting irreversible thermochromism and obtained by the polymerization of a monomer of formula I :

$$CH_3\text{-}(CH_2)_n\text{-}C{\equiv}C\text{-}C{\equiv}C\text{-}(CH_2)_{n'}\text{-}CH_3 \quad I$$

in which n and n′ are identical or different integers between 2 and 21, or of a mixture of such monomers, the said monomer or monomers being in the crystalline state.

2. Temperature indicator according to claim 1, characterized in that the monomer is in the form of a polycrystalline film or a single crystal in the crystalline state.

3. Temperature indicator according to one of claims 1 or 2, characterized in that the polydiacetylene compound is obtained by the photopolymerization, by irradiation with high-energy radiation, of at least one diacetylenic monomer of formula I as defined in claim 1.

4. Temperature indicator according to any one of claims 1 to 3, characterized in that the polydiacetylene compound is a mixture of the polydiacetylenic polymer and the corresponding diacetylenic monomer or monomer mixture.

5. Temperature indicator according to any one of claims 1 to 4, characterized in that the polydiacetylene compound is deposited on a chemically inert substrate in the form of a thin film.

6. Temperature indicator according to any one of claims 1 to 5, characterized in that the polydiacetylene compound is obtained by the photopolymerization, by irradiation with high-energy radiation, of at least one diacetylenic monomer of formula I as defined in claim 1, after incorporation into a thermoplastic in a molten state.

7. Temperature indicator according to any one of claims 1 to 5, characterized in that the polydiacetylene compound is obtained by the photopolymerization, with UV radiation, of at least one monomer of formula I for

a sufficient time to give an absorption peak at between 580 and 650 nm.

## Claims

### Claims for the following Contracting States : AT and ES

1. Method of preparation of a temperature indicator consisting of at least one polydiacetylene compound exhibiting irreversible thermochromism characterized in that the polydiacetylene compound is obtained by the photopolymerization, by irradiation with high-energy radiation, of at least one diacetylenic monomer of formula I :

$$CH_3\text{-}(CH_2)_n\text{-}C{\equiv}C\text{-}C{\equiv}C\text{-}(CH_2)_{n'}\text{-}CH_3 \quad I$$

in which n and n′ are identical or different integers between 2 and 21, or of a mixture of such monomers, the said monomer or monomers being in the crystalline state.

2. Method according to claim 1, characterized in that the monomer of formula I is in the form of a polycrystalline film or a single crystal in the crystalline state.

3. Method of preparation of a temperature indicator according to one of claims 1 or 2, characterized in that the polydiacetylene compound is a mixture of the polydiacetylenic polymer and the corresponding diacetylenic monomer or monomer mixture.

4. Method of preparation of a temperature indicator according to any one of claims 1 to 3, characterized in that the polydiacetylene compound is deposited on a chemically inert substrate in the form of a thin film.

5. Method of preparation of a temperature indicator according to any one of claims 1 to 4, characterized in that the polydiacetylene compound is obtained by the photopolymerization, by irradiation with high-energy radiation, of at least one diacetylenic monomer of formula I after incorporation into a thermoplastic in a molten state.

6. Method of preparation of a temperature indicator according to any one of claims 1 to 4, characterized in that the polydiacetylene compound is obtained by the photopolymerization, with UV radiation, of at least one monomer of formula I for a sufficient time to give an absorption peak at between 580 and 650 nm.

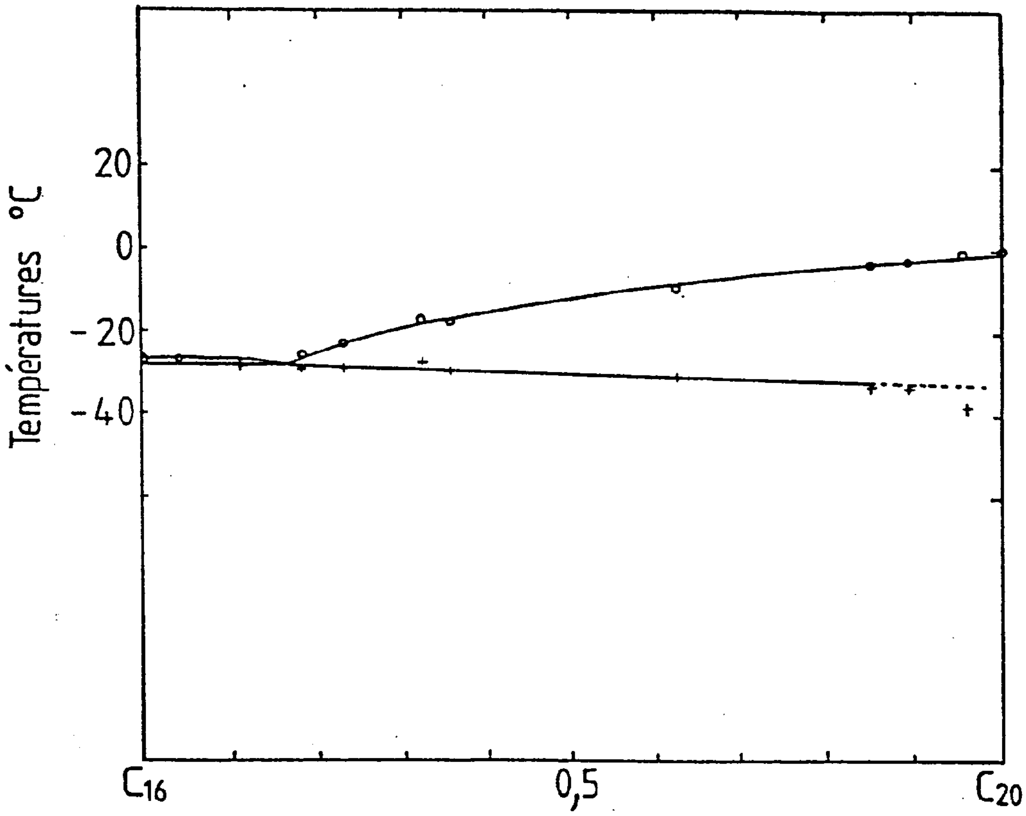
Températures °C
20
0
-20
-40
C16
0,5
C20

Fig-1a

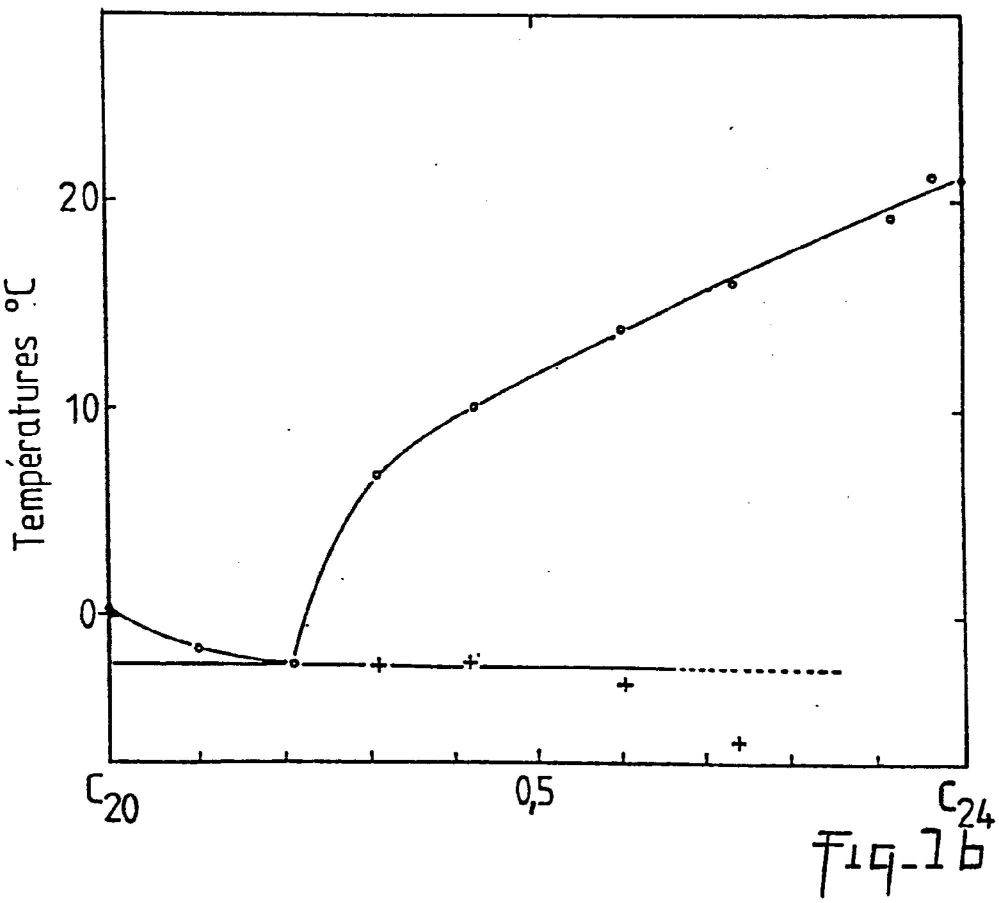
Températures °C
20
10
0
C20
0,5
C24

Fig-1b

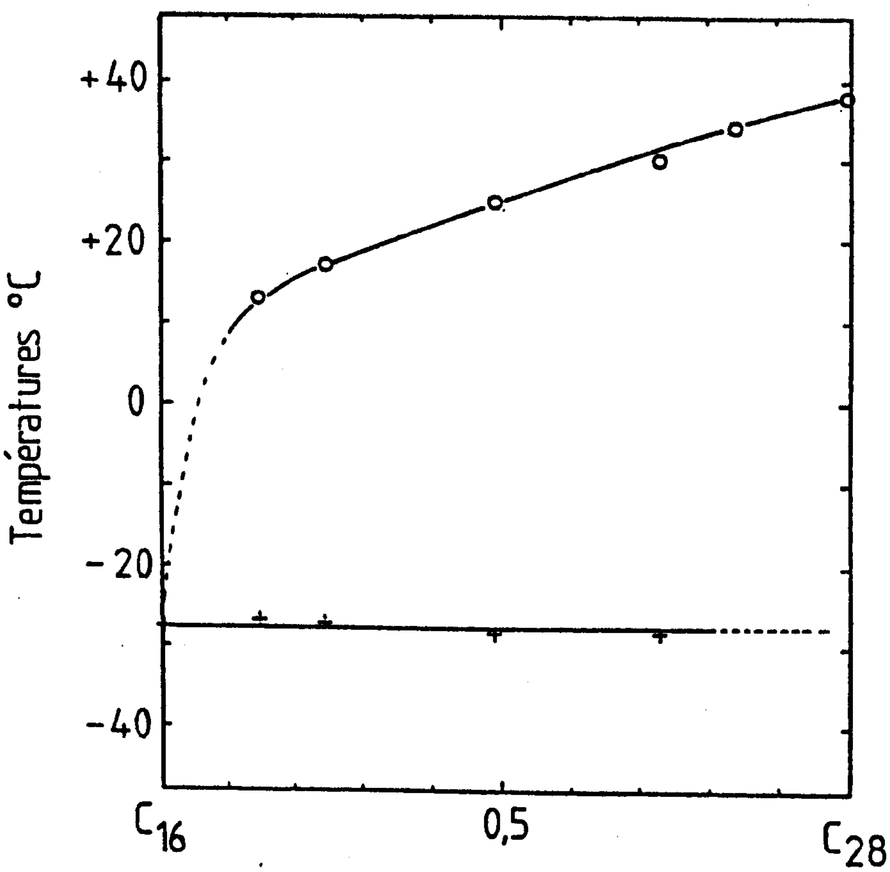
+40
+20
0
-20
-40
Températures °C
C16
0,5
C28

Fig-1c

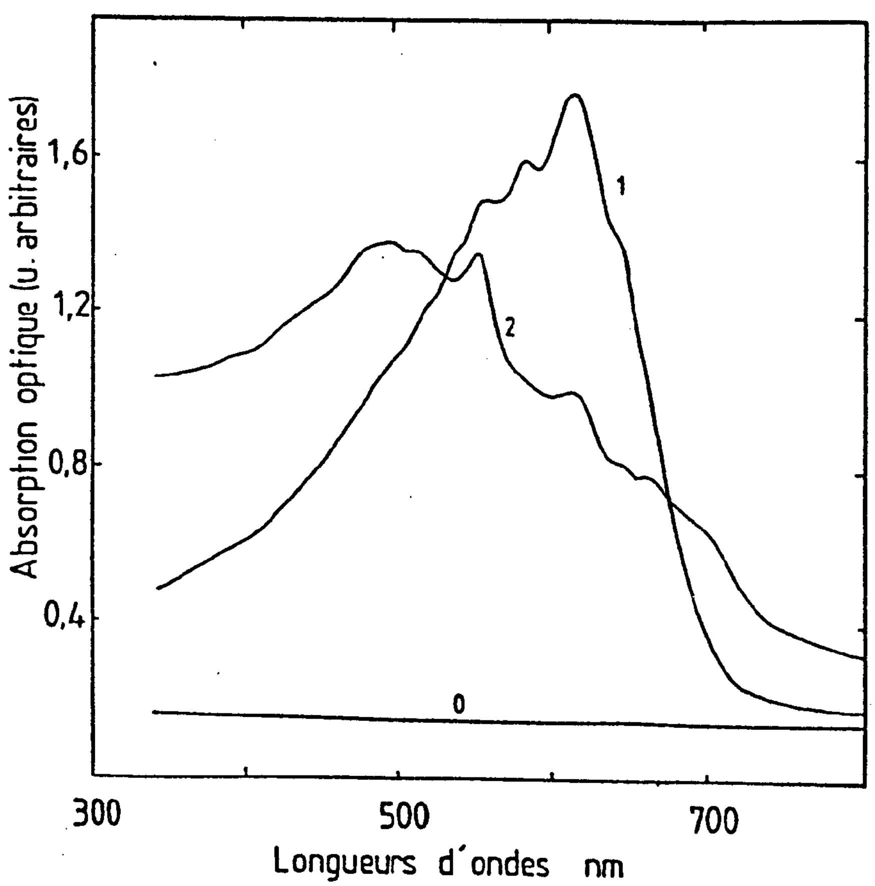
1,6
1,2
0,8
0,4
Absorption optique (u. arbitraires)
1
2
0
300
500
700
Longueurs d'ondes nm

Fig-2a

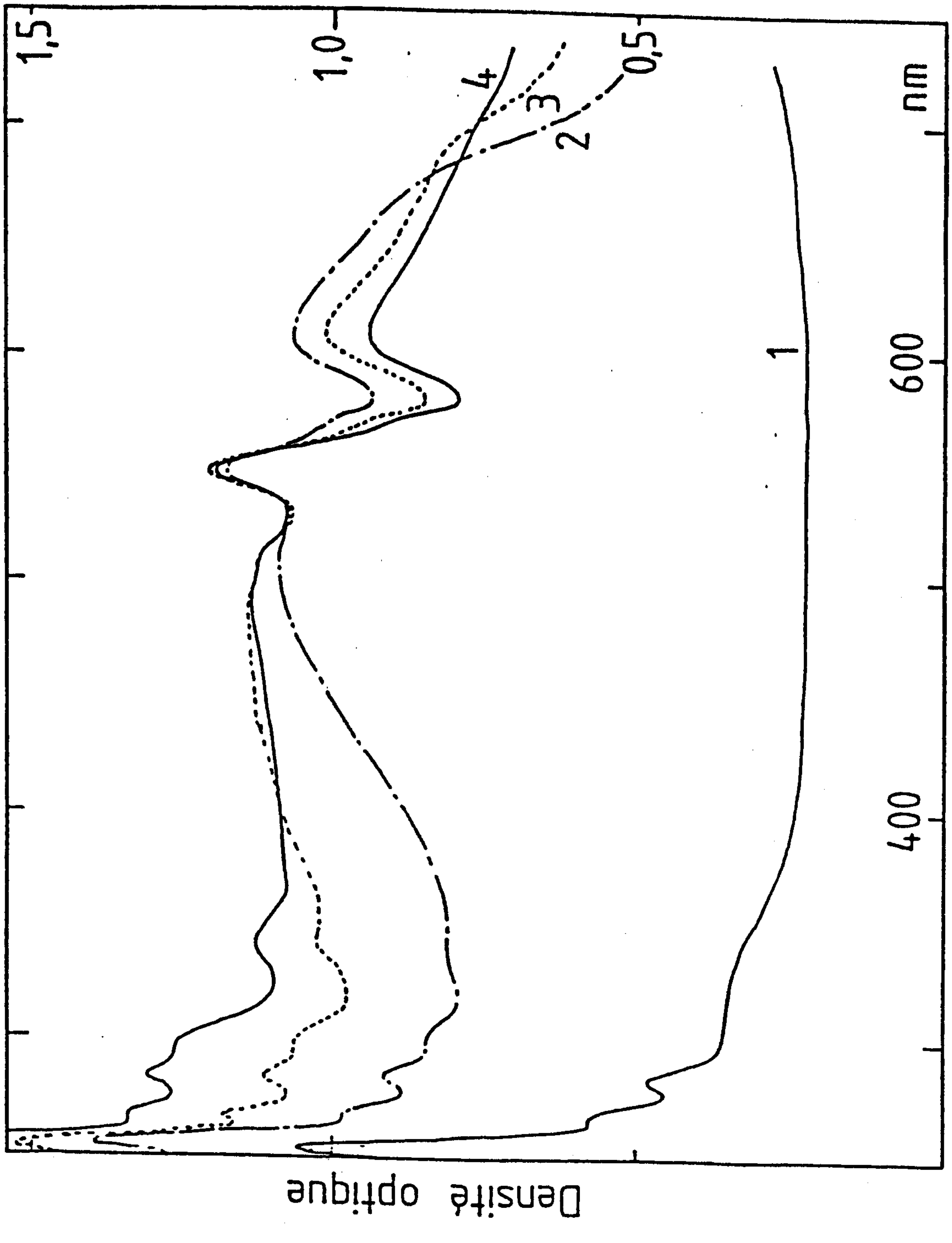


Fig-2b

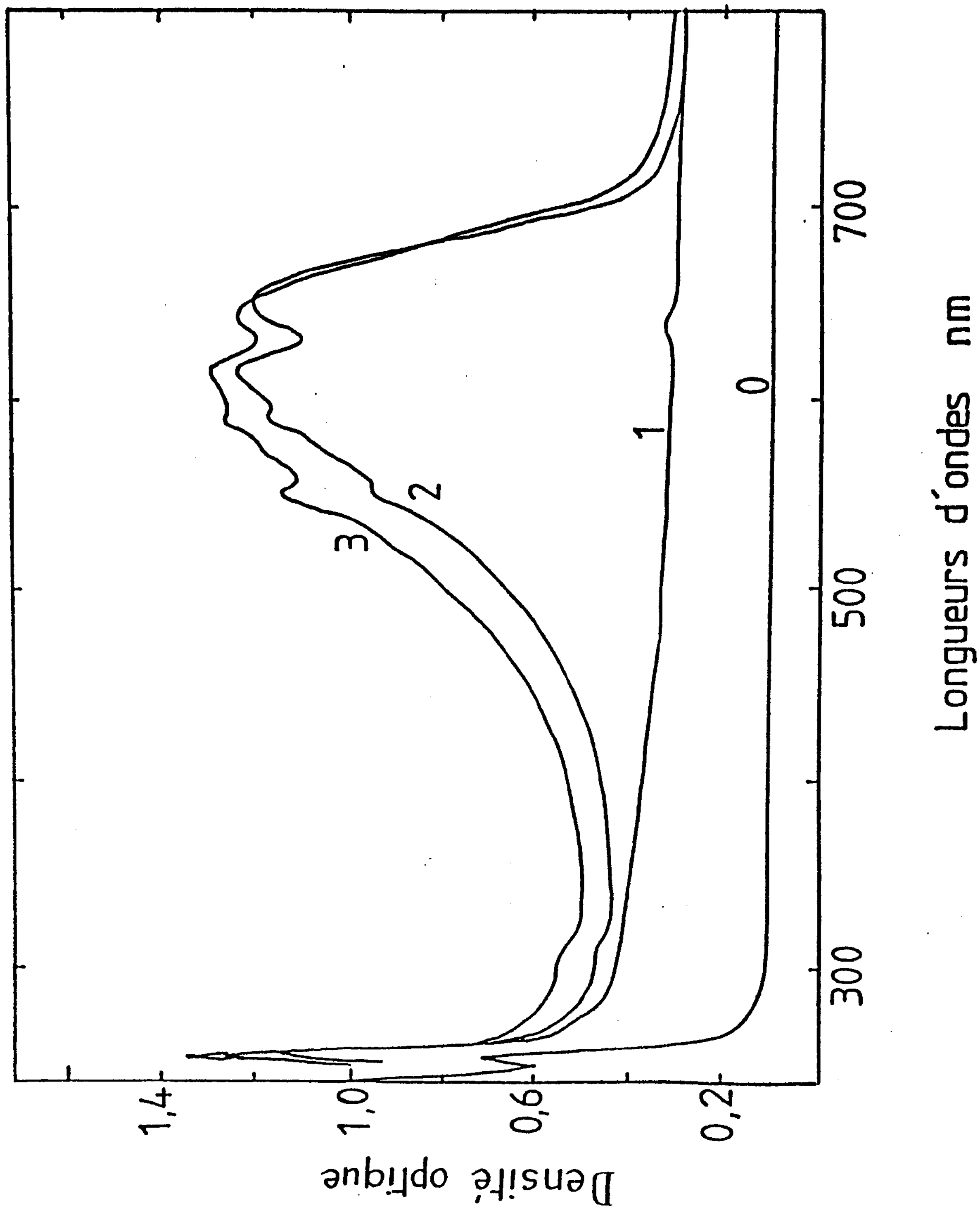
Densité optique
1,4
1,0
0,6
0,2
300
500
700
Longueurs d'ondes nm
0
1
2
3

Fig-2C

Fig-3a

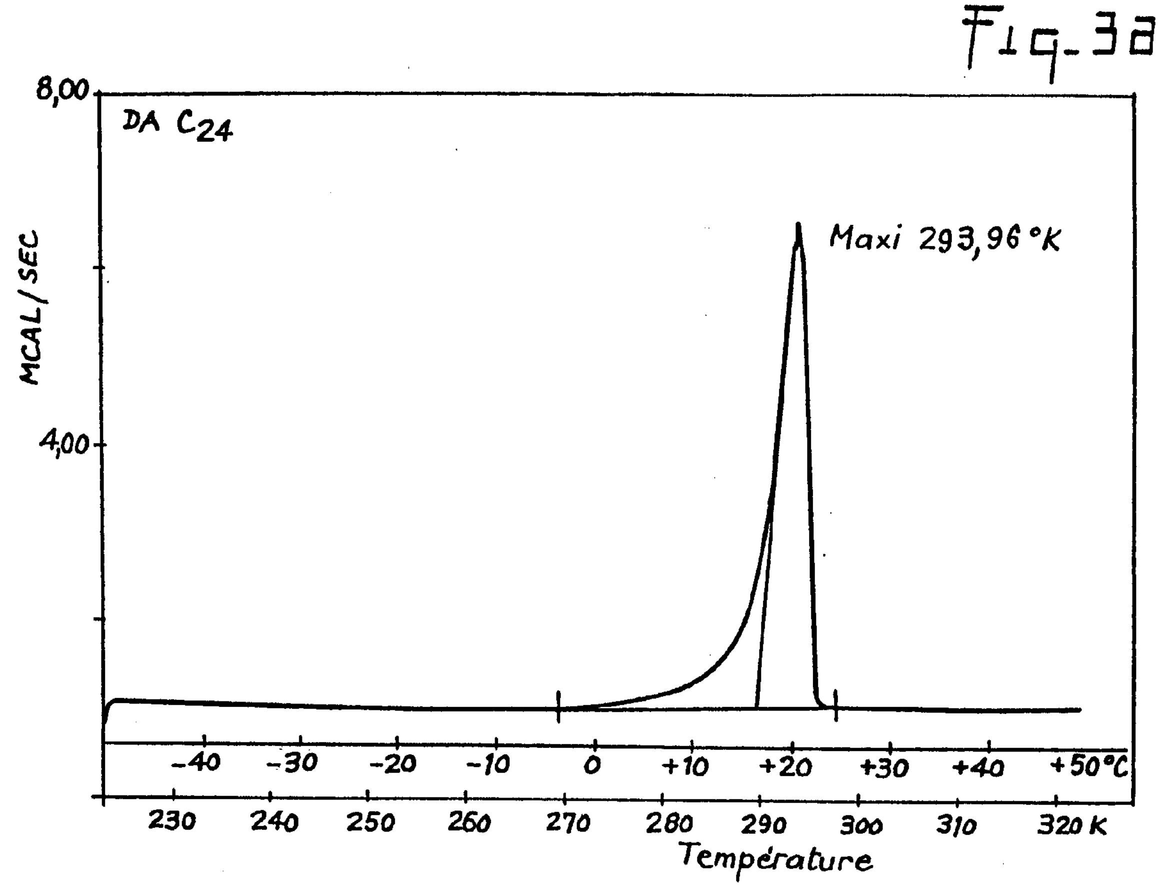
8,00
DA C24
Maxi 293,96 °K
MCAL/SEC
4,00
-40
-30
-20
-10
0
+10
+20
+30
+40
+50°C
230
240
250
260
270
280
290
300
310
320 K
Température

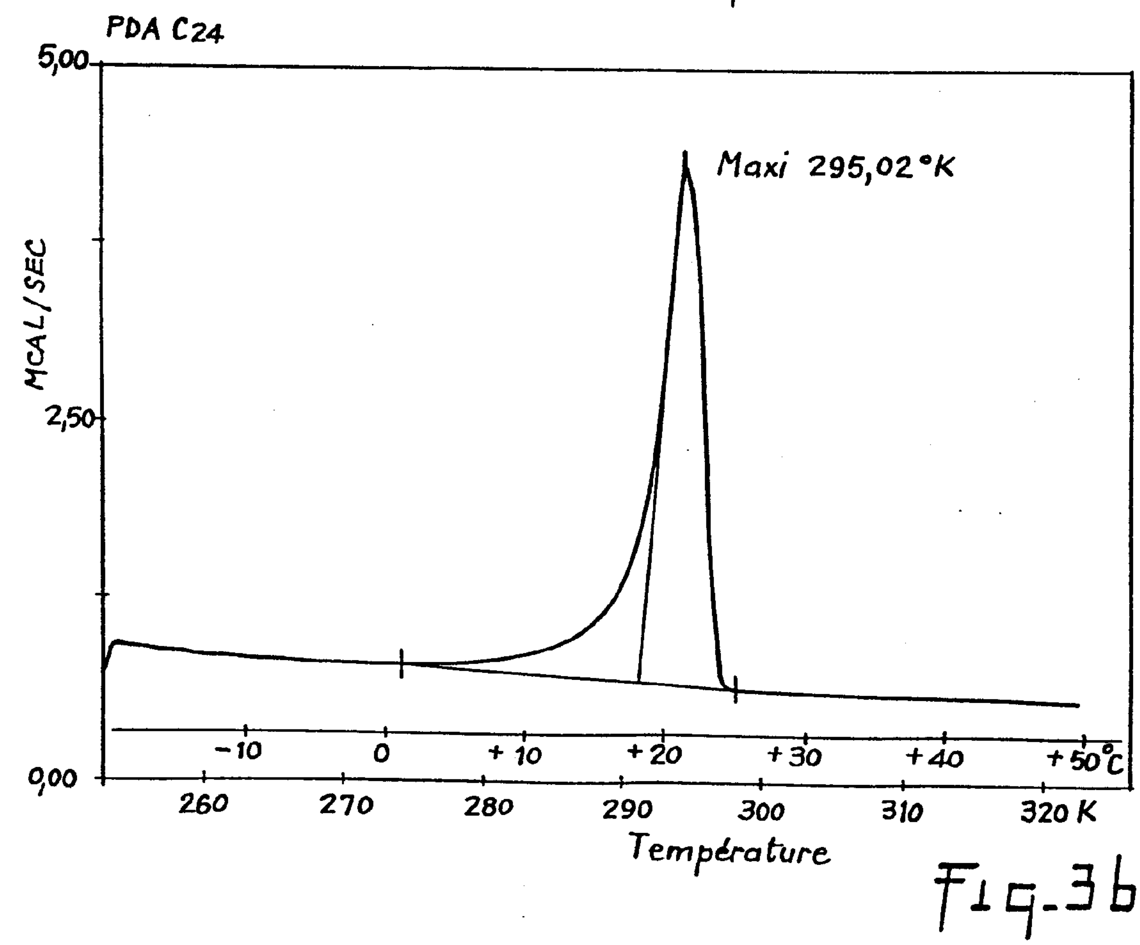
PDA C24
5,00
Maxi 295,02 °K
MCAL/SEC
2,50
0,00
-10
0
+10
+20
+30
+40
+50°C
260
270
280
290
300
310
320 K
Température

Fig-3b

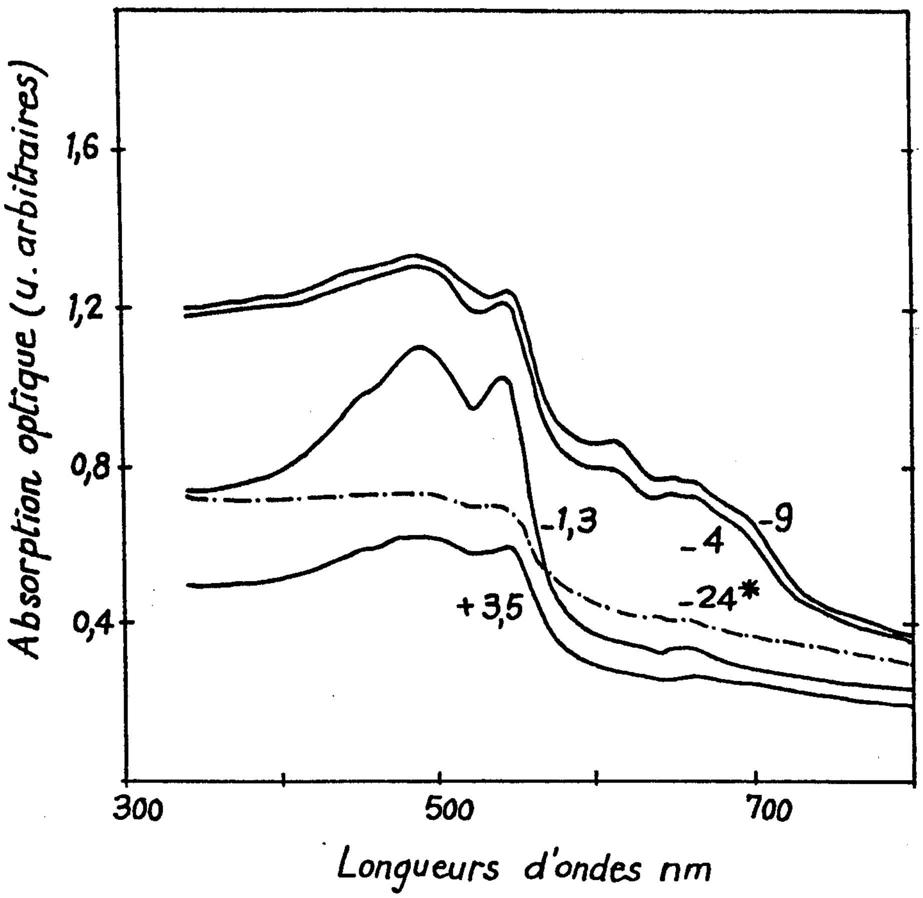
Absorption optique (u. arbitraires)
1,6
1,2
0,8
0,4
300
500
700
Longueurs d'ondes nm
-1,3
-9
-4
-24*
+3,5

Fig-4a

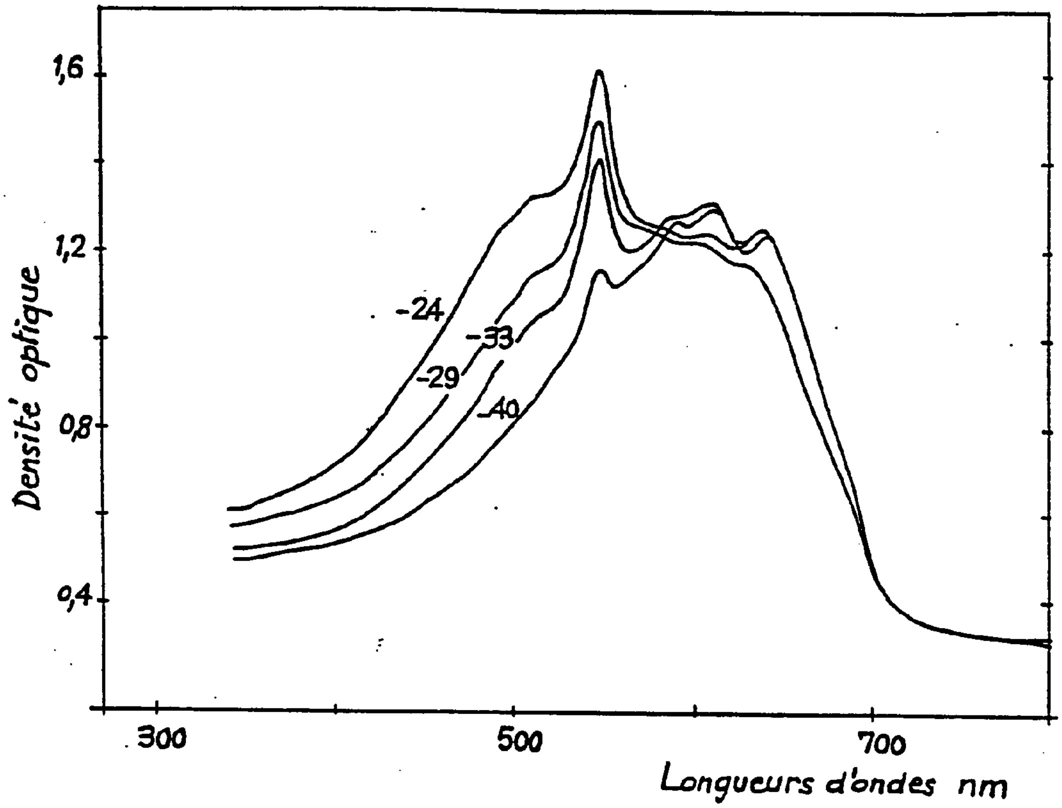
1,6
1,2
0,8
0,4
Densité optique
-24
-33
-29
-40
300
500
700
Longueurs d'ondes nm

Fig-4b

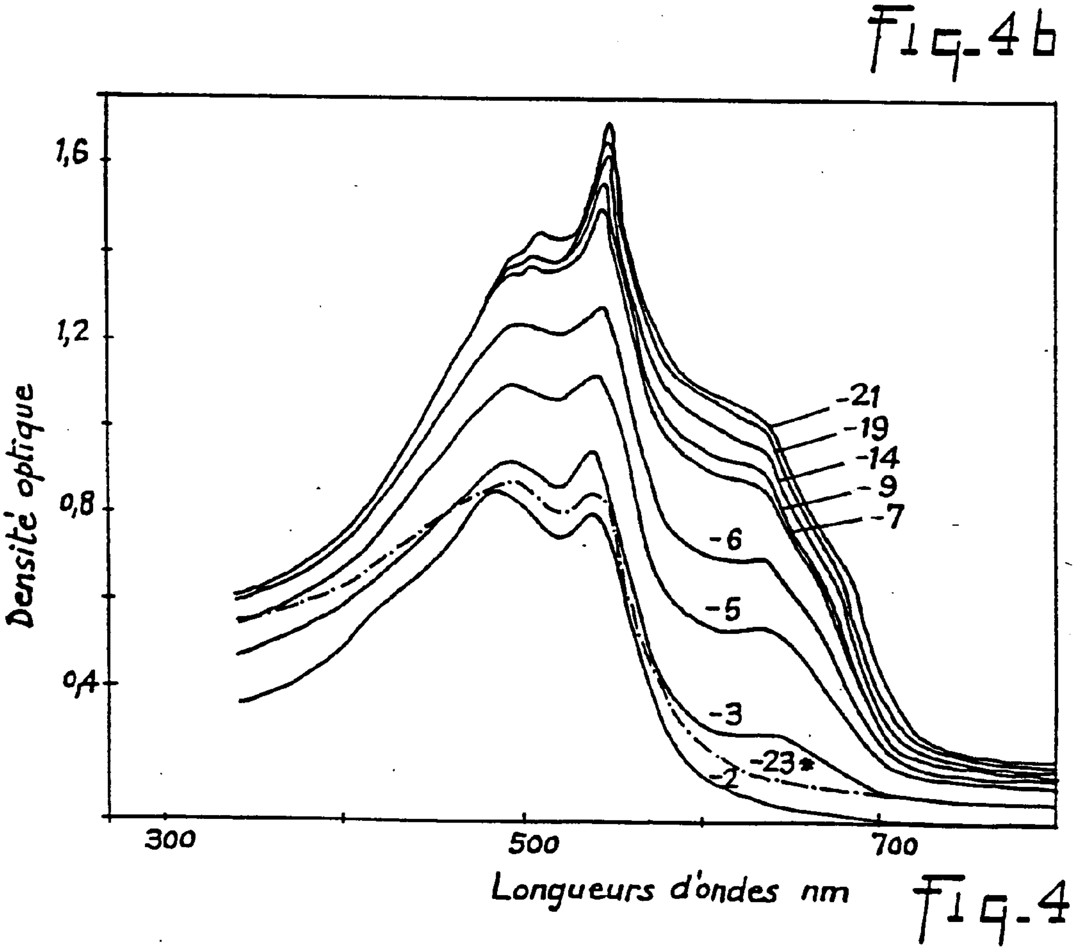
1,6
1,2
0,8
0,4
Densité optique
-21
-19
-14
-9
-7
-6
-5
-3
-23*
-2
300
500
700
Longueurs d'ondes nm

Fig-4c